# FASCICULE DE BREVET EUROPEEN

(11) **EP 2 033 819 B1**
(45) Date de publication et mention de la délivrance du brevet: **20.06.2012**
(21) Numéro de dépôt: 08300264.2
(22) Date de dépôt: 03.09.2008
(51) Int. Cl.: B60G 17/016, B60G 21/055

(54) **Dispositif de déconnexion et de connexion de deux demi-barres antiroulis pour véhicule automobile**
Vorrichtung zum Entkoppeln und Ankoppeln von zwei Querstabilisatoren für Kraftfahrzeug
Device for disconnecting and connecting two stabiliser half-bars for an automobile

(30) Priorité: 04.09.2007 FR 0706178
(43) Date de publication de la demande: 11.03.2009
(73) Titulaire: Renault s.a.s., 92100 Boulogne-Billancourt (FR)
(72) Inventeur: Albert, Laurent, 78180 Montigny Le Bretonneux (FR); Carcenac, Charles, 75015 Paris (FR); Masson, Olivier, 75019 Paris (FR)

(56) Documents cités:
- EP-A- 1 314 588
- EP-A- 1 634 732
- WO-A-02/053398
- WO-A-03/045719
- DE-A1- 19 846 275
- JP-A- 2 270 617
- JP-A- 6 032 134
- US-A- 4 919 444
- US-A- 6 022 030
- US-A1- 2004 169 346
- US-A1- 2005 167 932

## Description

L'invention se situe dans le domaine des dispositifs anti-roulis pour véhicules automobiles.

Pour mémoire, en situation de virage, la force centrifuge provoque le basculement du véhicule vers l'extérieur du virage, autour de son axe longitudinal. Ce basculement est dénommé "roulis". Il est généralement de quelques degrés d'angle.

Afin d'améliorer le confort de conduite et la tenue de route lorsque le véhicule est en situation de virage, et donc la sécurité, il est connu de disposer sur le véhicule une barre dite "d'anti-roulis", ou "barre de torsion", qui s'étend transversalement au véhicule.

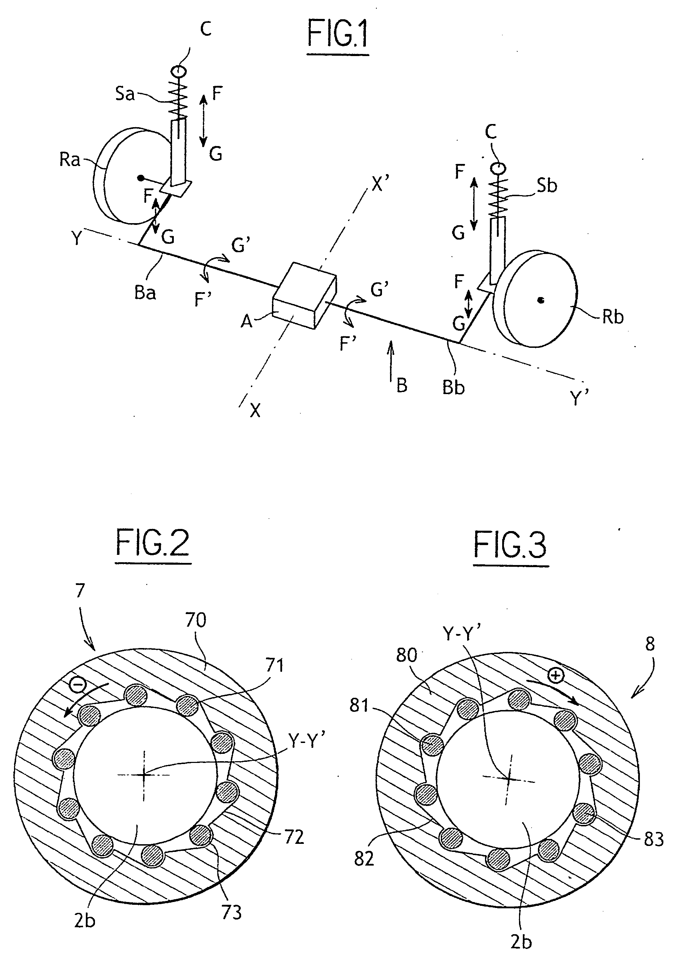

La figure 1 jointe illustre de façon schématique le train avant d'un véhicule automobile équipé d'une telle barre anti-roulis B.

En se reportant à la figure 1, on peut voir qu'un véhicule automobile comprend une caisse C, (représentée de façon schématique) et au moins une paire de roues latérales Rₐ. R_{b}, opposées l'une à l'autre et suspendues indépendamment l'une de l'autre, par rapport à ladite caisse C, à l'aide d'un dispositif de suspension Sₐ, S_{b}.

Les deux roues Rₐ, R_{b} sont mobiles verticalement l'une par rapport à l'autre et par rapport à la caisse C, comme schématisé par les flèches F en direction ascendante et G en direction descendante.

Conformément à l'état de la technique, la barre anti-roulis B a une forme générale en "U". Elle s'étend selon une direction **Y-Y'** perpendiculaire à l'axe longitudinal **X-X'** du véhicule, et ses deux extrémités sont recourbées pour définir deux leviers.

Cette barre B peut pivoter autour de l'axe **Y-Y'** comme représenté par les flèches F' et G' et les extrémités libres des deux leviers sont reliées à la partie mobile des dispositifs de suspension respectivement Sₐ et S_{b}.

Ainsi, lorsque le véhicule bascule autour de la direction longitudinale **X-X',** l'extrémité de l'un des leviers de la barre anti-roulis s'infléchit vers le bas et l'autre vers le haut, ce qui provoque une torsion de la barre au fur et à mesure que cette dernière résiste au basculement et au roulis du véhicule. La barre anti-roulis B sert à maintenir la carrosserie du véhicule au niveau horizontal.

Dans certaines situations, notamment lorsque le véhicule roule en ligne droite, la barre anti-roulis B a au contraire pour effet de connecter directement les roues Ra et Rb du véhicule entre elles, de sorte que le mouvement de l'une des roues, par exemple la roue Rb est copié par la roue Ra. Ainsi, si la roue Rb du véhicule passe sur un obstacle, elle va avoir à tendance se soulever (flèche F), la partie centrale de la barre anti-roulis B va pivoter dans le sens anti-horaire (flèche F') et l'extrémité opposée de la barre anti-roulis B aura tendance à soulever également la roue Ra (flèche F).

Ce phénomène est dénommé "copiage".

Afin d'éviter ce phénomène de copiage, le dispositif précité a été amélioré.

On connaît ainsi dans l'état de la technique une barre anti-foulis B, composée de deux demi-barres Ba et Bb reliées entre elles par un actionneur A. Ce dernier est représenté uniquement de façon schématique sur la figure 1.

Cet actionneur a pour rôle de connecter ou au contraire de déconnecter les deux demi-barres Ba et Bb, en fonction de l'état de fonctionnement du véhicule, c'est-à-dire suivant que ce véhicule se déplace en ligne droite ou dans un virage,

On connaît déjà dans l'état de la technique des dispositifs anti-roulis dont les actionneurs A sont actifs ou semi-actifs.

Dans le premier cas, ces actionneurs permettent de venir contrer le roulis pris par le véhicule.

On connaît ainsi d'après les documents GB-2 324 512 et GB-2 334 758 des systèmes d'actionneurs hydrauliques. Cette solution technique présente toutefois de nombreux inconvénients liés la présence du fluide et à l'encombrement du dispositif puisqu'une architecture hydraulique implique notamment l'ajout d'une pompe et d'une canalisation pour acheminer les fluides. Les autres inconvénients sont liés au bruit, aux vibrations et à la consommation énergétique de ces systèmes, qui a un impact sur les émissions de CO₂.

On connaît également des systèmes d'actionneurs électriques, voir notamment à ce sujet le document US-2006/138732. Toutefois, les prestations obtenues du fait du dimensionnement sont en-dessous de celles des systèmes hydrauliques.

Dans le second cas, les actionneurs semi-actifs servent à limiter ou à empêcher la prise de roulis.

La solution décrits dans le document US-6 428 019 consiste à utiliser un crabot afin d'embrayer ou de déblayer les deux demi-barres de la barre anti-roulis. Toutefois, on notera que ce type de dispositif peut s'user rapidement et offre des possibilité de commande (et donc de prestations) très limitées. De plus, le crabot est relativement bruyant à chaque accouplement.

Les documents US-6 022 030 et US-4 919 444 décrivent des dispositifs de déconnexion totale ou partielle et de connexion de deux demi-barres antiroulis droite et gauche coaxiales d'un véhicules automobile. Cependant ces dispositifs ne permettent pas d'assurer un fonctionnement normal, c'est-à-dire de connexion des deux demi-barres antiroulis, en cas de défaillance.

L'invention a pour but de fournir un système anti-roulis efficace, qui offre un bon compromis entre les prestations de confort pour les occupants du véhicule, c'est-à-dire peu de copiage entre les roues droite et gauche lorsque le véhicule circule en ligne droite et des prestations de sécurité active, c'est-à-dire un faible roulis spécifique.

Plus précisément, l'invention a pour but de fournir un "actionneur" ou dispositif de connexion et de déconnexion des deux demi-barres d'une barre anti-roulis, qui soit activé par un moteur électrique, afin d'éviter les problèmes de l'art antérieur qui existent avec les actionneurs hydrauliques, tout en étant dimensionné pour fournir un couple suffisant pour limiter le moment de roulis pris par le véhicule au niveau de son centre de gravité.

Un autre but de l'invention est de fournir un tel dispositif qui soit fiable même en cas de défaillance du moteur électrique. En d'autres termes, si ce dispositif tombe en panne, les deux demi-barres anti-roulis doivent se trouver en situation connectée, ce qui correspond à la situation normale sur un véhicule muni d'une barre anti-roulis fonctionnant en mode passif.

Enfin, un tel dispositif devra présenter un faible coût et une faible consommation énergétique.

A cet effet, l'invention concerne un dispositif de déconnexion totale ou partielle et de connexion des deux demi-barres antiroulis droite et gauche coaxiales d'un véhicule automobile, qui comprend une caisse et au moins une paire de roues latérales opposées l'une à l'autre et indépendamment suspendues, de manière à être mobiles verticalement l'une par rapport à l'autre et par rapport à la caisse, chaque demi-barre étant couplée à l'une de ses extrémités aux dispositifs de suspension des roues, ledit dispositif de déconnexion et de connexion étant positionné entre les deux demi-barres.

Conformément à l'invention, il comprend deux roues libres montées coaxiales autour de l'une, dite "première", des deux demi-barres antiroulis, la bague extérieure de l'une des roues libres dite "horaire" pouvant être entraînée en rotation librement dans le sens horaire autour de ladite première demi-barre antiroulis par un moteur électrique dit "horaire" et étant bloquée en rotation dans le sens anti-horaire par rapport à cette première demi-barre, la bague extérieure de l'autre roue libre dite "anti-horaire" pouvant être entraînée en rotation librement dans le sens anti-horaire autour de ladite première demi-barre antiroulis par un moteur électrique dit "anti-horaire" et étant bloquée en rotation dans le sens anti-horaire par rapport à cette première demi-barre, et les deux moteurs horaire et anti-horaire sont supportés par un bâti solidaire en rotation de la seconde demi-barre antiroulis et sont commandés par un calculateur en fonction de divers paramètres de fonctionnement du véhicule, de façon à permettre la connexion des deux demi-barres et la transmission du couple lorsque les deux moteurs sont à l'arrêt et la déconnexion des deux demi-barres lorsque les deux moteurs sont actionnés.

Selon d'autres caractéristiques avantageuses et non limitatives, prises seules ou en combinaison :
- les deux moteurs horaire et anti-horaire entraînent en rotation respectivement la bague extérieure horaire et la bague extérieure anti-horaire de manière irréversible ;
- il comprend un dispositif réducteur de vitesse entre chaque moteur et la bague extérieure de la roue libre qu'il entraîne ;
- il comprend deux supports annulaires rotatifs montés coaxiaux autour de la première demi-barre, la partie centrale du premier support étant solidaire en rotation de la bague extérieure de la roue libre anti-horaire et sa périphérie supportant une couronne dentée entraînée en rotation par le moteur électrique anti-horaire et la partie centrale du second support étant solidaire en rotation de la bague extérieure de la roue libre horaire et sa périphérie supportant une couronne dentée entraînée en rotation par le moteur électrique horaire, les deux couronnes dentées étant des engrenages réducteur de vitesse ;
- les deux moteurs à entraînement irréversible entraînent chacun en rotation un réducteur qui peut être une vis sans fin, qui à son tour entraîne la rotation de l'une des couronnes dentées ;
- les moteurs horaire et anti-horaire sont des moteurs à vitesse variable dont la vitesse de rotation peut être commandée par le calculateur pour être égale à la vitesse de rotation de la première demi-barre ou supérieure à celle-ci ;
- il comprend un capteur de la position angulaire relative entre les deux demi-barres antiroulis ;
- les deux moteurs horaire et anti-horaire sont commandés par le calculateur, de façon qu'un seul d'entre eux soit entraîné en rotation pour permettre le pivotement de l'une des deux demi-barres et le blocage de l'autre.

L'invention concerne également un véhicule automobile équipé d'un dispositif de déconnexion totale ou partielle et de connexion de ses deux demi-barres antiroulis droite et gauche conforme à celui décrit précédemment.

D'autres caractéristiques et avantages de l'invention apparaîtront de la description qui va maintenant en être faite, en référence aux dessins annexés, qui en représentent, à titre indicatif mais non limitatif un mode de réalisation possible.

Sur ces dessins :
- la figure 1 précitée est un schéma représentant le train avant d'un véhicule automobile muni d'une barre anti-roulis constituée de deux demi-barres,
- les figures 2 et 3 sont des vues en coupe des deux roues libres du dispositif,
- la figure 4 représente de façon schématique le dispositif de connexion et déconnexion conforme à l'invention et,
- la figure 5 est un organigramme représentant un mode de réalisation du schéma de commande du dispositif.

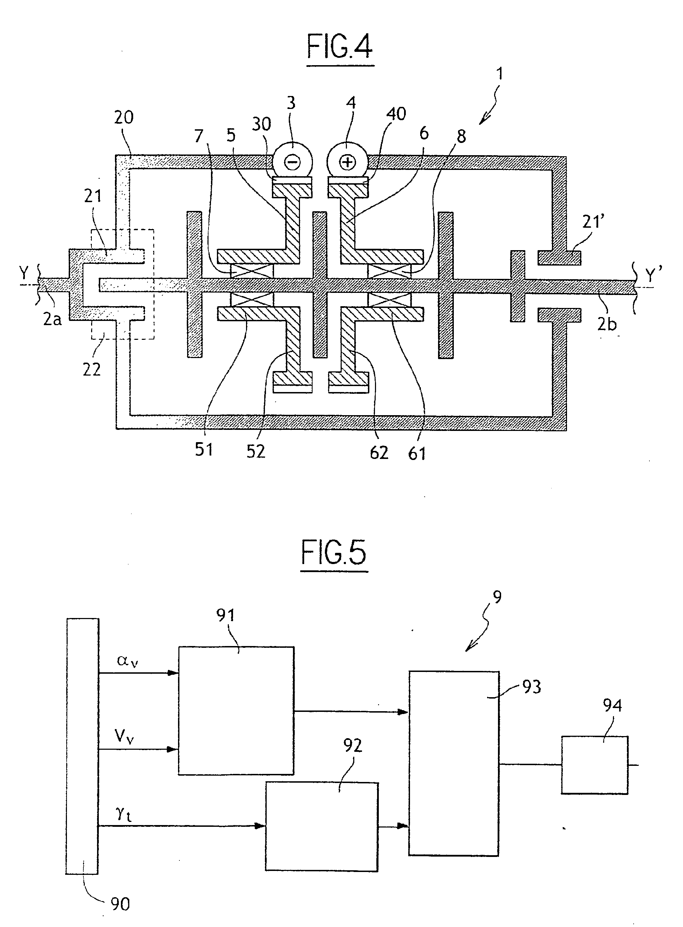

En se reportant à la figure 4, on peut voir un dispositif 1 de connexion et de déconnexion de deux demi-barres anti-roulis, dénommé ci-après à des fins de simplification "actionneur".

Les deux demi-barres anti-roulis portent respectivement les références numériques 2a et 2b.

Conformément à l'état de la technique, chaque demi-barre anti-roulis présente une portion qui s'étend selon une direction transversale **Y-Y',** par rapport à l'axe longitudinal **X-X'** du véhicule et une extrémité perpendiculaire ou sensiblement perpendiculaire jouant le rôle de levier et reliée à la partie mobile des amortisseurs.

Sur la figure 4, seules les portions transversales de chaque demi-barre anti-roulis 2a, 2b sont partiellement représentées. Ces deux portions sont coaxiales d'axe **Y-Y'.**

L'une des deux demi-barres anti-roulis, ici la demi-barre 2a, supporte un boîtier rotatif 20 ou "cage", dont l'axe de rotation correspond à l'axe commun **Y-Y'** aux deux demi-barres 2a, 2b.

Ce boîtier 20 est donc solidaire en rotation de la demi-barre 2a.

La demi-barre 2b est guidée en rotation par au moins un palier 21, 21' solidaire(s) du boîtier 20. Une partie de la portion transversale de la demi-barre 2b s'étend à l'intérieur du boîtier 20.

La demi-barre 2b est donc en liaison pivot avec la demi-barre 2a.

Par ailleurs, le boîtier rotatif 20 supporte deux moteurs électriques 3, 4.

Chaque moteur électrique 3, respectivement 4, est apte à entraîner en rotation, et de manière irréversible, une couronne dentée 30, respectivement 40, à denture extérieure.

Les couronnes 30 et 40 sont respectivement portées par des supports annulaires 5 et 6. Les supports 5 et 6 sont aptes à tourner autour de l'axe **Y-Y'.**

Le tenue "irréversible" signifie que le moteur peut entraîner la couronne en rotation mais non l'inverse.

A titre d'exemple, le mouvement d'entraînement irréversible peut être assuré par une vis sans fin actionnée par le moteur.

L'un des moteurs, par convention ici le moteur 3, entraîne la rotation irréversible de la couronne 30 dans le sens anti-horaire, schématisé par le signe mathématique "moins". Le moteur 4 entraîne quant à lui la rotation irréversible de la couronne 40 dans le sens horaire, schématisé par le signe mathématique "plus".

De plus, deux dispositifs connus de l'homme du métier sous l'appellation "roue libre", référencés 7 et 8, sont portés par la demi-barre 2b.

Un mode de réalisation possible de ces roues libres est représenté plus en détail sur les figures 2 et 3.

En se reportant à la figure 2, on peut voir que la roue libre 7 comprend une bague extérieure 70 et des billes ou galets cylindriques 71, logés dans des cavités 73 ménagées dans la paroi intérieure de cette bague. Des rampes inclinées sont également ménagées sur la paroi intérieure de la bague entre chaque paire de cavités.

La bague 70 est concentrique à l'axe **Y-Y'** de la demi-barre 2b.

Les billes 71 sont au contact de la paroi intérieure de la bague 70 et de la surface extérieure de la demi-barre 2b.

La structure particulière de ce dispositif de roue libre autorise la libre rotation de la bague extérieure 70 dans le sens anti-horaire par rapport à la demi-barre 2b. Sa rotation dans le sens inverse n'est pas possible. Lorsque le moteur 3 est activé, il entraîne, via le support 5, la rotation de la bague 70 dans le sens anti-horaire et cette bague se comporte comme un roulement à billes vis-à-vis de la demi-barre 2b.

De plus, un débattement angulaire de la demi-barre 2b est possible dans le sens horaire, mais non dans le sens inverse.

La roue libre 8 représentée sur la figure 3 présente une structure similaire mais symétriquement inversée. Elle comprend une bague extérieure 80 dont la paroi intérieure comporte des cavités 83, aptes à recevoir des billes 81 et des rampes 82 inclinées dans le sens inverse des rampes 72.

Ainsi, la bague 80 peut tourner librement en rotation dans le sens horaire. lorsqu'elle est entraînée par le moteur 4 via le support 6, mais est bloquée dans le sens anti-horaire.

De plus, un débattement angulaire de la demi-barre 2b est possible dans le sens anti-horaire, mais non dans le sens inverse.

Enfin, on notera que les couronnes 30 et 40, qui présentent un grand diamètre, jouent un rôle de réducteur de vitesse. Les bagues 70 et 80 sont donc entrainées en rotation à des vitesses moindres que celles délivrées par l'arbre de sortie des moteurs 3 et 4.

Le support 5 comprend un manchon annulaire 51, coaxial à l'axe **Y'-Y'** et solidaire par sa face intérieure de la bague extérieure 70 de la roue libre 7.

Ce manchon 51 se prolonge à l'une de ses extrémités par une collerette annulaire 52 qui s'étend radialement et dont la périphérie est solidaire de la couronne dentée 30.

De façon similaire, le support 6 comprend un manchon 61 qui supporte intérieurement la bague extérieure 80 de la roue libre 8 et une collerette 62 qui supporte la couronne dentée 40.

Enfin, un capteur de position 22 positionné au voisinage de l'extrémité libre de la demi-barre 2b et du palier (par exemple 21) solidaire de la dcmi-barre 2a permet de déterminer la position relative de la demi-barre 2a par rapport à la demi-barre 2b.

Un tel capteur est représenté de façon schématique sur la figure 4. Il s'agit par exemple d'un capteur optique.

Le fonctionnement du dispositif va maintenant être décrit en faisant référence au tableau 1 ci-dessous.

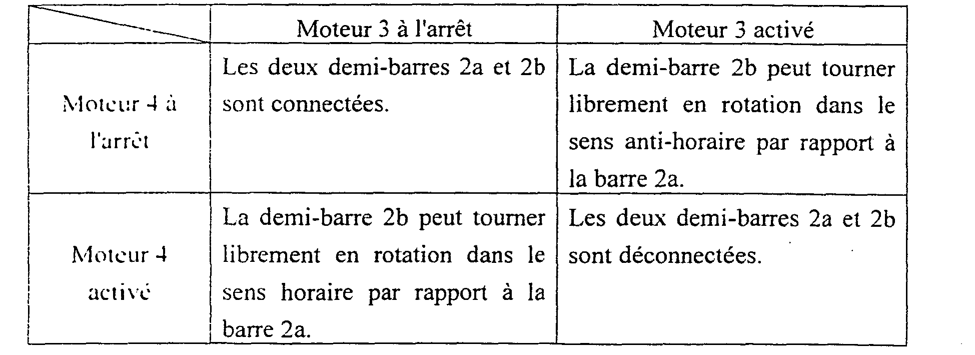

Lorsque les deux moteurs 3 et 4 sont activés, la bague 70 est entraînée en rotation dans le sens anti-horaire, elle ne se bloque pas par rapport à la demi-barre 2b et ne transmet pas de couple à celle-ci. Par ailleurs, la bague 80 est entraînée en rotation dans le sens horaire, elle ne se bloque pas non plus et ne transmet pas de couple à la demi-barre 2b.

Le résultat est que les deux demi-barres 2a et 2b sont déconnectées l'une de l'autre.

De plus, on notera que si la vitesse de rotation relative entre les deux demi-barres 2a et 2b est inférieure aux vitesses de rotations des deux couronnes, il n'y a alors pas de blocage.

Lorsqu'aucun des deux moteurs 3 et 4 n'est activé, les bagues 70 et 80 sont fixes.

La barre 2b est libre de pivoter dans le sens horaire par rapport à la bague 70, toutefois elle ne le peut pas par rapport à la bague 80. Inversement elle est libre de pivoter dans le sens anti-horaire par rapport à la bague 80, toutefois elle ne le peut pas par rapport à la bague 70. En conséquence, la barre 2b est immobilisée en rotation et elle connectée à la demi-barre 2a.

Enfin, si le moteur 3 est activé et que le moteur 4 ne l'est pas, la bague 70 peut tourner librement en rotation dans le sens anti-horaire par rapport à la barre 2a et n'a pas d'effet de transmission du couple sur la demi-barre 2b. Par contre, la bague 80 est fixe. En conséquence, la demi-barre 2b peut soit rester à l'arrêt, soit tourner librement dans le sens anti-horaire par rapport à la bague 80 fixe et par rapport à la bague 70 mobile. En revanche, si la demi-barre 2b est sollicitée en rotation dans le sens horaire par un mouvement de la roue du véhicule, elle est bloquée par la bague 80 et il y a transmission du couple à la demi-barre 2a, car il y a connexion entre les deux demi-barres.

Inversement, si le moteur 4 est activé et que le moteur 3 ne l'est pas, la demi-barre 2b peut tourner librement en rotation dans le sens horaire. Si la demi-barre 2b est sollicitée dans le sens anti-horaire par la roue du véhicule, elle est bloquée par la bague 70 et il y a transmission du couple à la demi-barre 2a.

En d'autres termes, une roue libre à la fonction suivante :
- Si la vitesse relative entre la bague extérieure et la demi-barre anti-roulis centrale 2b est positive, alors il n'y a pas d'accouplement et le comportement du système est similaire à celui d'un roulement à billes.
- Si au contraire, la vitesse relative entre la bague extérieure et la demi-barre 2b est nulle et que le couple est exercé pour tendre une vitesse relative négative, alors le système se solidarise et un couple peut être transmis de l'un des éléments à l'autre.

Afin d'obtenir un couple de solidarisation, on notera que la vitesse de la couronne extérieure 70 ou 80 doit être inférieure à la vitesse de rotation de la demi-barre anti-roulis 2b.

Pour comprendre l'intérêt de l'invention, il faut distinguer deux situations de fonctionnement, suivant que le véhicule est en ligne droite ou au contraire en virage.

Lorsque l'on roule en ligne droite, il est nécessaire de supprimer le lien entre la roue droite et la roue gauche pour éliminer le phénomène de copiage.

Dans cette situation, il est nécessaire que les demi-barres anti-roulis 2a et 2b soient déconnectées. Comme expliqué précédemment, ceci signifie que les deux moteurs 3 et 4 doivent être activés pour obtenir ce résultat.

En situation de virage, les deux demi-barres anti-roulis 2a et 2b vont tourner, l'une étant sollicitée dans le sens horaire et l'autre dans le sens anti-horaire. Afin de limiter la prise de roulis par le véhicule, il est alors au contraire nécessaire de solidariser les deux demi-barres 2a et 2b. Pour cela, et en référence au tableau précité, on constate que les deux moteurs électriques 3 et 4 doivent être à l'arrêt.

Dans ce dernier cas, le couple exercé par la barre anti-roulis passe à travers le réducteur irréversible.

L'actionneur 1 conforme à l'invention se comporte donc comme un système de connexion ou de déconnexion des demi-barres anti-roulis.

Le dispositif conforme à l'invention présente de nombreux avantages.

Premièrement, les moteurs électriques 3 et 4 n'ont pas besoin de délivrer un couple important. Le moteur doit simplement pouvoir accélérer suffisamment rapidement pour entraîner le réducteur irréversible et empêcher la rotation des deux demi-barres anti-roulis 2a et 2b. La contrainte pour dimensionner les moteurs 3 et 4 sera donc uniquement sa constante d'accélération. Comme les moteurs entraînent uniquement les couronnes 30 et 40 qui sont des charges légères, leur dimensionnement, et donc leur encombrement, leur poids et leur coût seront très faibles.

Deuxièmement, si les deux moteurs électriques 3 et 4 où le dispositif électronique qui assure leur commande sont défaillants, l'actionneur conforme à l'invention se retrouve dans la configuration où les deux moteurs sont désactivés et donc où les deux bagues extérieures 70 et 80 sont bloquées. Dans cette situation, les deux demi-barres anti-roulis 2a et 2b sont connectées. On se retrouve ainsi dans la situation connue de l'état de la technique où la barre anti-roulis est en une seule pièce et fonctionne en mode passif.

En d'autres termes, le mode "dégradé" du dispositif est "sûr" en terme de dynamique du véhicule.

Troisièmement, il est également possible d'obtenir un glissement limité, c'est-à-dire de laisser le véhicule prendre un certain roulis mais tout en contenant la vitesse de ce roulis. Ainsi, lorsqu'une certaine valeur d'angle de roulis est atteinte, cette valeur étant mesurée par le capteur de position 22, il est envisageable de bloquer les deux demi-barres anti-roulis dans la position où elle se trouve et donc de conserver l'angle de roulis ainsi atteint. Cette solution présente l'avantage de ne pas virer à plat. Le conducteur n'est donc pas perturbé et le roulis pris est contenu.

Enfin, on constate que le dispositif 1 conforme à l'invention permet l'utilisation de deux demi-barres anti-roulis 2a, 2b plus raides que celles normalement employées. En effet, un dispositif de roue libre exerce très peu de frottements. Une fois le dispositif entraîné, le couple de frottement est très faible voir nul. On se retrouve avec un système dont les deux demi-barres anti-roulis sont quasiment découplés. Ce point est important puisqu'il permet de dimensionner ces deux barres anti-roulis en conséquence. L'intérêt d'augmenter leur taille est que le véhicule verra son roulis spécifique (c'est-à-dire celui pris en fonction de l'accélération transversale du véhicule) diminuer, une fois que les deux demi-barres 2a, 2b seront connectées l'une à l'autre.

Comme expliqué précédemment, les moteurs électriques 3 et 4 seront mis ou non en rotation en fonction de la situation de roulement du véhicule automobile.

Il est donc indispensable de pouvoir déterminer avec précision si le véhicule se trouve en ligne droite ou en virage.

Pour ce faire, une première méthode consiste à lire la valeur de l'angle du volant et la vitesse du véhicule, ces informations étant fournies par d'autres systèmes électroniques (ex : ABS, ESP) via un réseau de communication (ex : le CAN). Le calculateur commande alors le fonctionnement ou l'arrêt des moteurs 3 et/ou 4.

Une autre variante de commande est envisageable. Son organigramme est illustré sur la figure 5.

Dans cet organigramme, le bloc 90 représente l'acquisition des données suivantes :
- av : cette grandeur représente la valeur de l'angle du volant demandée par le conducteur. Le capteur apte à mesurer cette valeur angulaire est monté en série sur tous les véhicules automobiles.
- Vᵥ : cette grandeur représente la vitesse du véhicule. Elle est donnée par le bloc connu par l'homme du métier sous l'acronyme "ESP/ABS", d'après la terminologie anglaise "*Electronic Stability Program*/*Anti-Lock Braking System*", qui signifie "programme de contrôle électronique de la trajectoire et système de freinage automatique". Le capteur fournissant cette information est également montée en série sur les véhicules automobiles.
- γₜ : cette grandeur représente l'accélération transversale du véhicule. Elle est fournie par le bloc ESP/ABS précité.

Le bloc 91 est en charge de détecter sur la base des informations αᵥ et Vᵥ à partir de quel moment le véhicule automobile est considéré comme étant en train de tourner. Ce bloc peut être une cartographie, qui en fonction de la vitesse et de l'angle volant indique si le véhicule tourne. En fonction de l'indication calculée, un message indique l'état du véhicule au bloc 93.

L'accélération transversale Yₜ permet de donner une information sur le copiage entre les deux roues transversales, à condition que le capteur correspondant à l'acquisition de ces informations ne soit pas placé sur l'axe X-X' de roulis du véhicule. Ceci est le cas lorsque l'accélération transversale est déterminée par le groupement de capteurs de l'ESP qui est placé au centre de gravité du véhicule.

Le bloc 92 est un filtre passe-haut qui sert à éliminer les basses fréquences de l'accélération transversale. Le seuil de détection est placé sensiblement entre 3 Hz et 10 Hz et est défini en fonction du type de véhicule. On ne conserve que les fréquences au-dessus de cette valeur seuil, et on détecte ainsi les agitations transversales produites par le phénomène de copiage sur le véhicule.

Le bloc 93 permet de déterminer les actions à réaliser en fonction des informations retournées par les blocs 91 et 92.

Si l'information issue du bloc 91 est que le véhicule automobile se trouve dans un virage, la consigne envoyée vers l'unité centrale 94 du moteur est de bloquer le moteur 3 et 4, afin de garantir que les deux demi-barres 2a et 2b seront connectées.

Une variante consiste à contrôler la vitesse de rotation de ces moteurs, afin de contenir la vitesse du roulis.

Si au contraire, l'information fournie par le bloc 91 est que le véhicule se trouve en ligne droite, il faut alors tenir compte de l'information fournie par le bloc 92.

Si l'information sortant du bloc 92 est que l'accélération transversale est sensiblement nulle ou inférieure à un seuil déterminé, dans ces conditions les moteurs 3 et 4 sont maintenus à l'arrêt. En effet, du fait de la non agitation transversale, les deux demi-barres 2a et 2b pourront être connectées, sans dégrader pour autant le confort des passagers. De plus, dans ce cas, la consommation d'énergie est minimisée.

Si au contraire malgré le filtre passe-haut 92, l'information sortant du bloc 92 est qu'il existe une accélération transversale, cela signifie que le véhicule se trouve dans une situation de copiage. Dans ces conditions, il est nécessaire de faire tourner les moteurs 3 et 4. La vitesse de rotation des moteurs est choisie de façon à garantir la déconnection des deux demi-barres 2a, 2b, c'est-à-dire qu'ils tournent plus vite que les deux demi-barres lorsque celles-ci sont sollicitées. Par ailleurs, dès que le filtre passe-haut 92 cesse de retourner un signal, il faut conserver les moteurs en rotation pendant un laps de temps suffisant pour garantir un retour en mode "demi-barres connectés" le plus transparent possible pour les passagers du véhicule.

## Revendications

1. Dispositif (1) de déconnexion totale ou partielle et de connexion des deux demi-barres antiroulis droite et gauche (2a, 2b) coaxiales d'un véhicule automobile qui comprend une caisse (C) et au moins une paire de roues latérales (Ra, Rb) opposées l'une à l'autre et indépendamment suspendues, de manière à être mobiles verticalement l'une par rapport à l'autre et par rapport à la caisse (C), chaque demi-barre (2a, 2b) étant couplée à l'une de ses extrémités aux dispositifs de suspension (Sa, Sb) des roues, ledit dispositif de déconnexion et de connexion (1) étant positionné entre les deux demi-barres (2a, 2b) et étant **caractérisé en ce qu'**il comprend deux roues libres (7, 8) montées coaxiales autour de l'une (2b), dite "première", des deux demi-barres antiroulis, la bague extérieure (80) de l'une des roues libres (8) dite "horaire" pouvant être entraînée en rotation librement dans le sens horaire autour de ladite première demi-barre antiroulis (2b) par un moteur électrique (4) dit "horaire" et étant bloquée en rotation dans le sens anti-horaire par rapport à cette première demi-barre (2b), la bague extérieure (70) de l'autre roue libre (7) dite "anti-horaire" pouvant être entraînée en rotation librement dans le sens anti-horaire autour de ladite première demi-barre antiroulis (2b) par un moteur électrique (3) dit "anti-horaire" et étant bloquée en rotation dans le sens anti-horaire par rapport à cette première demi-barre (2b), et **en ce que** les deux moteurs horaire (4) et anti-horaire (3) sont supportés par un bâti (20) solidaire en rotation de la seconde demi-barre antiroulis (2a) et sont commandés par un calculateur en fonction de divers paramètres de fonctionnement du véhicule, de façon à permettre la connexion des deux demi-barres (2a, 2b) et la transmission du couple lorsque les deux moteurs (3, 4) sont à l'arrêt, et la déconnexion des deux demi-barres (2a, 2b) lorsque les deux moteurs (3, 4) sont actionnés.

2. Dispositif (1) selon la revendication 1, **caractérisé en ce que** les deux moteurs horaire (4) et anti-horaire (3) entraînent en rotation respectivement la bague extérieure horaire (80) et la bague extérieure anti-horaire (70) de manière irréversible.

3. Dispositif (1) selon la revendication 1 ou 2, **caractérisé en ce qu'**il comprend un dispositif réducteur de vitesse (30, 40) entre chaque moteur (3, 4) et la bague extérieure (70, 80) de la roue libre (7, 8) qu'il entraîne.

4. Dispositif (1) selon la revendication 3, **caractérisé en ce qu'**il comprend deux supports annulaires rotatifs (5, 6) montés coaxiaux autour de la première demi-barre (2b), la partie centrale (51) du premier support (5) étant solidaire en rotation de la bague extérieure (70) de la roue libre anti-horaire (7) et sa périphérie (52) supportant une couronne dentée (30) entraînée en rotation par le moteur électrique anti-horaire (3) et la partie centrale (61) du second support (6) étant solidaire en rotation de la bague extérieure (80) de la roue libre horaire (8) et sa périphérie (62) supportant une couronne dentée (40) entraînée en rotation par le moteur électrique horaire (4), les deux couronnes dentées (30, 40) étant des engrenages réducteur de vitesse.

5. Dispositif (1) selon les revendications 2 et 4, **caractérisé en ce que** les deux moteurs (3, 4) à entraînement irréversible entraînent chacun en rotation un réducteur, qui à son tour entraîne la rotation de l'une des couronnes dentées (30, 40).

6. Dispositif (1) selon l'une des revendications précédentes, **caractérisé en ce que** les moteurs horaire (4) et anti-horaire (3) sont des moteurs à vitesse variable dont la vitesse de rotation peut être commandée par le calculateur pour être égale à la vitesse de rotation de la première demi-barre (2b) ou supérieure à celle-ci.

7. Dispositif (1) selon l'une des revendications précédentes, **caractérisé en ce qu'**il comprend un capteur (22) de la position angulaire relative entre les deux demi-barres antiroulis (2a) et (2b).

8. Dispositif (1) selon l'une des revendications précédentes, **caractérisé en ce que** les deux moteurs horaire (4) et anti-horaire (3) sont commandés par le calculateur, de façon qu'un seul d'entre eux soit entraîné en rotation pour permettre le pivotement de l'une des deux demi-barres (2a, 2b) et le blocage de l'autre.

9. Véhicule automobile équipé d'un dispositif (1) de déconnexion totale ou partielle et de connexion de ses deux demi-barres antiroulis droite et gauche (2a, 2b) conforme à l'une quelconque des revendications précédentes.

## Claims

1. Device (1) for the total or partial disconnection and connection of the two left and right coaxial stabilizer half-bars (2a, 2b) of a motor vehicle, comprising a vehicle body (C) and at least one pair of lateral wheels (Ra, Rb) arranged opposite one another and independently suspended, so as to be capable of vertical displacement one in relation to the other and in relation to the vehicle body (C), each half-bar (2a, 2b) being attached at one of its extremities to the suspension devices (Sa, Sb) for the wheels, the said device for disconnecting and connecting (1) being positioned between the two half-bars (2a, 2b) and being **characterized in that** it comprises two free wheels (7, 8) mounted coaxially around one (2b), referred to as the "first", of the two stabilizer half-bars, the external ring (80) of one of the free wheels (8), referred to as "clockwise", being capable of being caused to rotate freely in the clockwise direction about the said first stabilizer half-bar (2b) by an electric motor (4), referred to as "clockwise", and being blocked in its rotation in the anticlockwise direction in relation to this first half-bar (2b), the external ring (70) of the other free wheel (7), referred to as "anticlockwise", being capable of being caused to rotate freely in the anticlockwise direction about the said first stabilizer half-bar (2b) by an electric motor (3), referred to as "anticlockwise", and being blocked in its rotation in the clockwise direction in relation to this first half-bar (2b), and **in that** the two clockwise (4) and anticlockwise (3) motors are supported by a fixed structure (20) in a rotationally fixed manner with the second stabilizer half-bar (2a) and are controlled by a computer as a function of various operating parameters of the vehicle, in such a way as to permit the connection of the two half-bars (2a, 2b) and the transmission of the driving torque when the two motors (3, 4) are at a standstill, and the disconnection of the two half-bars (2a, 2b) when the two motors (3, 4) are actuated.

2. Device (1) according to Claim 1, **characterized in that** the two clockwise (4) and anticlockwise (3) motors cause the external clockwise ring (80) and the external anticlockwise ring (70) respectively to rotate in an irreversible manner.

3. Device (1) according to Claims 1 or 2, **characterized in that** it comprises a speed reduction device (30, 40) between each motor (3, 4) and the external ring (70, 80) of the free wheel (7, 8) which it drives.

4. Device (1) according to Claim 3, **characterized in that** it comprises two rotating annular supports (5, 6) mounted coaxially around the first half-bar (2b), the central section (51) of the first support (5) being rotationally fixed with the external ring (70) of the anticlockwise free wheel (7) and its periphery (52), supporting a toothed crown (30) that is caused to rotate by the anticlockwise electric motor (3), and the central section (61) of the second support (6) being rotationally fixed with the external ring (80) of the clockwise free wheel (8) and its periphery (62), supporting a toothed crown (40) that is caused to rotate by the clockwise electric motor (4), the two toothed crowns (30, 40) being speed reduction gears.

5. Device (1) according to Claims 2 and 4, **characterized in that** the two motors (3, 4) with irreversible drive each impart rotation to a reducer, which in turn causes one of the toothed crowns (30, 40) to rotate.

6. Device (1) according to one of the preceding claims, **characterized in that** the clockwise (4) and anticlockwise (3) motors are variable speed motors of which the speed of rotation can be controlled by the computer in order to be equal to or greater than the speed of rotation of the first half-bar (2b).

7. Device (1) according to one of the preceding claims, **characterized in that** it comprises a sensor (22) for the relative angular position between the two stabilizer half-bars (2a) and (2b).

8. Device (1) according to one of the preceding claims, **characterized in that** the two clockwise (4) and anticlockwise (3) motors are controlled by the computer in such a way that only one of them is caused to rotate in order to permit the pivoting of one of the two half-bars (2a, 2b) and the blocking of the other.

9. Motor vehicle equipped with a device (1) for the total or partial disconnection and connection of its two left and right coaxial stabilizer half-bars (2a, 2b) according to any of the preceding claims.

## Patentansprüche

1. Vorrichtung (1) zum vollständigen oder teilweisen Trennen und Verbinden von zwei rechten und linken koaxialen Stabilisator-Halbstangen (2a, 2b) eines Kraftfahrzeugs, das einen Aufbau (C) und mindestens ein Paar von seitlichen Rädern (Ra, Rb) enthält, die einander gegenüberliegen und unabhängig aufgehängt sind, um senkrecht zueinander und bezüglich des Aufbaus (C) beweglich zu sein, wobei jede Halbstange (2a, 2b) an einem ihrer Enden mit den Aufhängungsvorrichtungen (Sa, Sb) der Räder gekoppelt ist, wobei die Trenn- und Verbindungsvorrichtung (1) zwischen den zwei Halbstangen (2a, 2b) positioniert und **dadurch gekennzeichnet ist, dass** sie zwei Freiläufe (7, 8) enthält, die koaxial um eine so genannte "erste" (2b) der zwei Halbstangen montiert sind, wobei der so genannte "Uhrzeigersinn"-Außenring (80) eines der Freiläufe (8) von einem so genannten "Uhrzeigersinn"-Elektromotor (4) um die erste Stabilisator-Halbstange (2b) im Uhrzeigersinn frei in Drehung versetzt werden kann und im Gegenuhrzeigersinn bezüglich dieser ersten Halbstange (2b) in Drehung blockiert ist, wobei der so genannte "Gegenuhrzeigersinn"-Außenring (70) des anderen Freilaufs (7) von einem so genannten "Gegenuhrzeigersinn"-Elektromotor (3) um die erste Halbstange (2b) im Gegenuhrzeigersinn frei in Drehung versetzt werden kann und im Uhrzeigersinn bezüglich dieser ersten Halbstange (2b) in Drehung blockiert ist, und dass die zwei Uhrzeigersinn- (4) und Gegenuhrzeigersinn-Motoren (3) von einem Gestell (20) getragen werden, das in Drehung fest mit der zweiten Stabilisator-Halbstange (2a) verbunden ist, und von einem Rechner abhängig von verschiedenen Betriebsparametern des Fahrzeugs gesteuert werden, um die Verbindung der zwei Halbstangen (2a, 2b) und die Übertragung des Drehmoments, wenn die zwei Motoren (3, 4) abgeschaltet sind, und das Trennen der zwei Halbstangen (2a, 2b), wenn die zwei Motoren (3, 4) in Betrieb sind, zu erlauben.

2. Vorrichtung (1) nach Anspruch 1, **dadurch gekennzeichnet, dass** die zwei Uhrzeigersinn- (4) und Gegenuhrzeigersinn-Motoren (3) den Uhrzeigersinn-Außenring (80) bzw. den Gegenuhrzeigersinn-Außenring (70) unumkehrbar in Drehung versetzen.

3. Vorrichtung (1) nach Anspruch 1 oder 2, **dadurch gekennzeichnet, dass** sie eine Untersetzungsgetriebevorrichtung (30, 40) zwischen jedem Motor (3, 4) und dem Außenring (70, 80) des Freilaufs (7, 8) enthält, den er antreibt.

4. Vorrichtung (1) nach Anspruch 3, **dadurch gekennzeichnet, dass** sie zwei drehbare ringförmige Träger (5, 6) enthält, die koaxial um die erste Halbstange (2b) montiert sind, wobei der zentrale Bereich (51) des ersten Trägers (5) in Drehung fest mit dem Gegenuhrzeigersinn-Außenring (70) des Freilaufs (7) verbunden ist und sein Umfang (52) einen Zahnkranz (30) trägt, der von dem Gegenuhrzeigersinn-Elektromotor (3) in Drehung versetzt wird, und der zentrale Bereich (61) des zweiten Trägers (6) in Drehung fest mit dem Uhrzeigersinn-Außenring (80) des Freilaufs (8) verbunden ist und sein Umfang (62) einen Zahnkranz (40) trägt, der von dem Uhrzeigersinn-Elektromotor (4) in Drehung versetzt wird, wobei die zwei Zahnkränze (30, 40) Untersetzungs-Zahnradgetriebe sind.

5. Vorrichtung (1) nach den Ansprüchen 2 und 4, **dadurch gekennzeichnet, dass** die zwei Motoren (3, 4) mit unumkehrbarem Antrieb je ein Untersetzungsgetriebe in Drehung versetzen, das seinerseits die Drehung eines der Zahnkränze (30, 40) bewirkt.

6. Vorrichtung (1) nach einem der vorhergehenden Ansprüche, **dadurch gekennzeichnet, dass** die Uhrzeigersinn- (4) und Gegenuhrzeigersinn-Motoren (3) Motoren mit veränderlicher Drehzahl sind, deren Drehgeschwindigkeit vom Rechner gesteuert werden kann, um gleich der Drehgeschwindigkeit der ersten Halbstange (2b) oder höher als diese zu sein.

7. Vorrichtung (1) nach einem der vorhergehenden Ansprüche, **dadurch gekennzeichnet, dass** sie einen Sensor (22) der relativen Winkelstellung zwischen den zwei Stabilisator-Halbstangen (2a) und (2b) enthält.

8. Vorrichtung (1) nach einem der vorhergehenden Ansprüche, **dadurch gekennzeichnet, dass** die zwei Uhrzeigersinn- (4) und Gegenuhrzeigersinn-Motoren (3) vom Rechner so gesteuert werden, dass nur einer von ihnen in Drehung versetzt wird, um das Schwenken einer der zwei Halbstangen (2a, 2b) und das Blockieren der anderen zu erlauben.

9. Kraftfahrzeug, das mit einer Vorrichtung (1) zum vollständigen oder teilweisen Trennen und Verbinden seiner zwei rechten und linken Stabilisator-Halbstangen (2a, 2b) nach einem der vorhergehenden Ansprüche ausgestattet ist.
